# EUROPEAN PATENT APPLICATION

(11) **EP 3 078 472 A1**
(43) Date of publication of application: **12.10.2016**
(21) Application number: 15162585.2
(22) Date of filing: 07.04.2015
(51) Int. Cl.: B29C 39/04, B29C 39/06, B29C 67/24, B29L 31/10

(54) **AUTOMATED SYSTEM FOR THE PRODUCTION OF VERY SLIM RESIN TILES WITH THE HELP OF TRAY-SHAPED CONTAINERS**

(71) Applicant: Ferrari, Paola, 41049 Sassuolo MO (IT)
(72) Inventor: Ferrari, Paola, 41049 Sassuolo MO (IT)
(74) Representative: Gagliardelli, Fabrizio

(57) **Abstract**

The system comprises a plurality of trays (7) in each of which the liquid mixture is poured, said liquid mixture characterizing the material the tiles are made of, that is resin.

The casting apparatus generally comprises two tanks containing the components still in their liquid state, one for the resin (1) and one for the adhesion catalyst (4), a series of tubes (2) and (5), valves (14) and (16), pumps (13) and (21) and finally the two distributors (13) and (15). Said apparatuses for the automated handling of the trays are fitted into plants comprising several machines so that the resin tiles arranged in the containers (CTP) are ready for the subsequent packaging steps once the process (e.g. drying, decoration etc.) is over.

## Description

### INTRODUCTION

The present invention relates to a highly automated system with no limits of size, for the production of very slim resin tiles (even less than one millimeter), starting from a generally liquid bi-component mixture constituted by resin and the solidification catalyst thereof, basically comprising a plurality of collection trays into which the mixture, still in its liquid state, is poured by suitable casting apparatuses.

### LIMITS OF THE PRIOR ART

Resin floorings are becoming increasingly customary as they exhibit characteristics and advantages which stand out from the ones of the known type such as ceramic tiles, carpet, wood, parquet, linoleum, and so on, thereby being suitable to be used not only for industrial floorings but also for private homes, offices, showrooms etc.

Easy cleaning, high mechanical strength, resistance to chemical corrosion, thinness and reasonable costs are the main advantages of resin floorings. Additionally, different types of finishes (i.e. gloss, satin, matt finishes) as well as customized colors are available.

According to the prior art, such floorings are realized on the basis of a bi-component liquid mixture constituted by resin (of the epoxy- polyurethane type, possibly mixed with mineral fillers such as sand and so on), and the solidification catalyst thereof which favors its solidification with a percentage generally below 5% .

While the mere laying of resin does not involve any particular technical difficulties, self-leveling or spatula-applied application, as well as following stabilisation thereof, may require several steps and a relatively long working time (3 to 5 days) thus making this kind of solution unsuitable for spaces which need to be renovated or the like.

### SCOPE AND ADVANTAGES

Scope of the present invention is to obviate the drawback described hereinabove by manufacturing slim resin tiles variously colored, decorated and flexible, alike in all their essential physical characteristics to resin floorings in one layer according to the prior art.

Said resin tiles can be overlaid on floorings or plane surfaces previously created which were sufficiently leveled with small quantities of proper adhesive, in such a way a walk-over area is obtained within a very short time, generally less than one hour.

A further advantage is that said resin tiles can be used for covering vertical walls and architectural structures of different types.

### LIST OF DRAWINGS

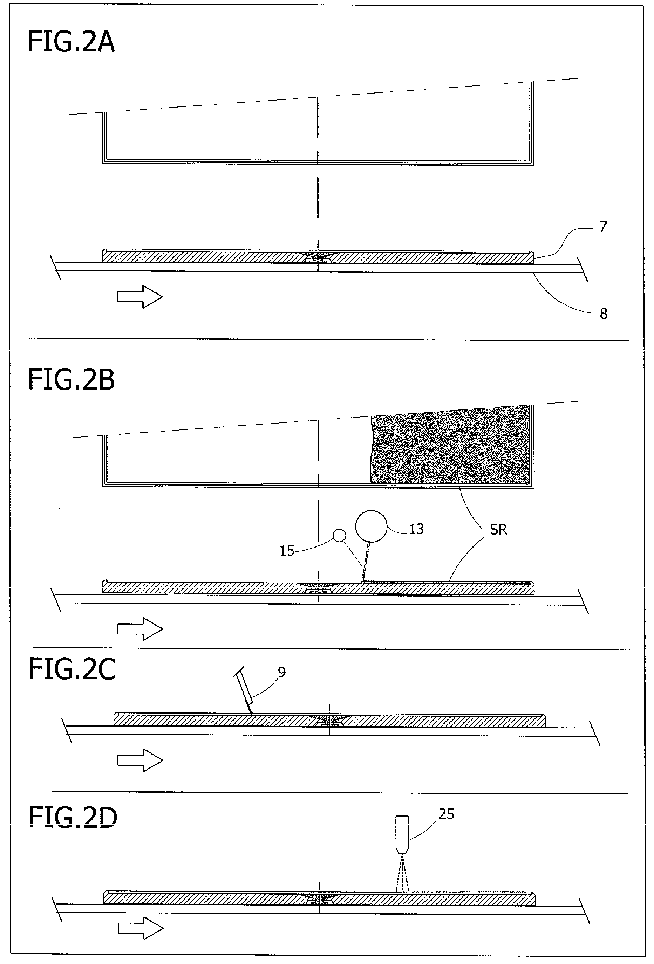

The present invention and the advantages thereof will be better described and illustrated according to the appended figures, showing a conventional but non-exclusive embodiment wherein:

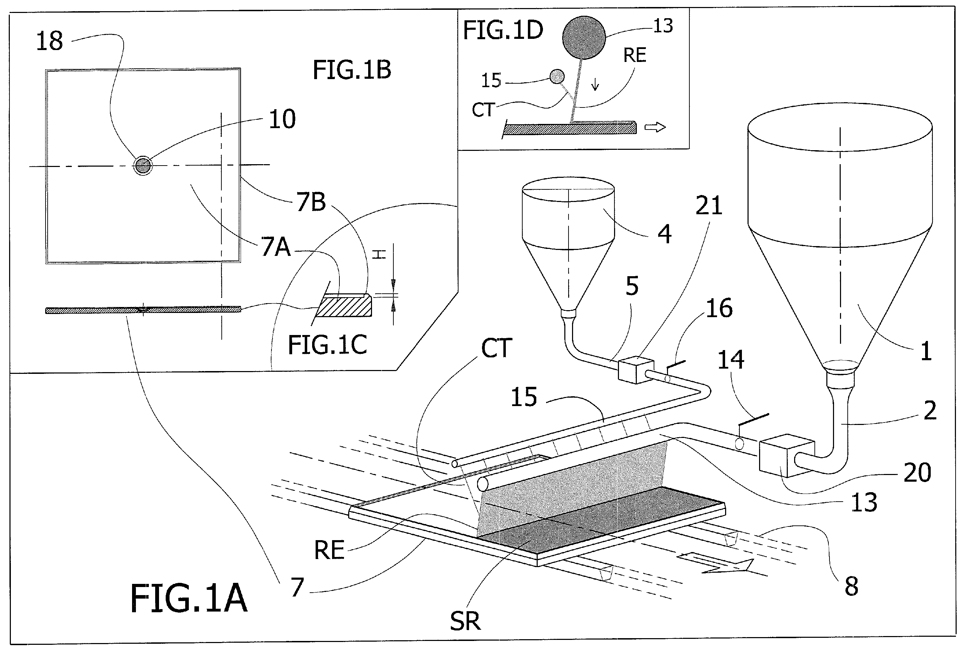

- Figure 1A is a simplified top view in perspective of the resin casting apparatus for pouring resin into the appropriate container of the invention herein;
- Figure 1B is a top and front view of the container of Figure 1A;
- Figure 1C is a detail of the container of Figure1B;
- Figure 1D is a side view of the jet of resin and catalyst thereof during the casting step;
- From Figure 2A to Figure 2D a filling sequence of the container of Figure 1B is shown.
- From Figure 3A to Figure 3H, several details of the air inlet valve of the container illustrated in Figure 1B appear;
- From Figure 4A to Figure 4C a picking-up sequence of a resin tile from the container of Figure 1B is shown;
- Figure 5A is a layout of a possible plant for the production of resin tiles as disclosed herein;
- Figure 5B and Figure 5C are front and enlarged views of two machines of the plant as illustrated in Figure 5A;

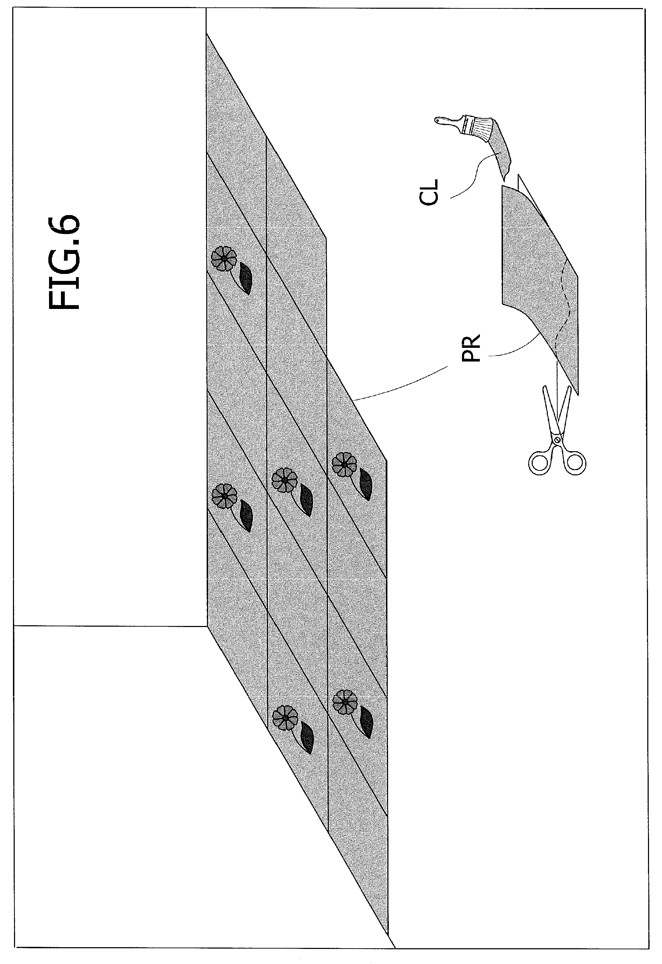

- Figure 6 is a perspective view of a flooring portion in its laying phase with one piece thereof shown as partially folded.

### DESCRIPTION OF THE COMPONENTS OF THE DISCLOSED CASTING

### APPARATUS

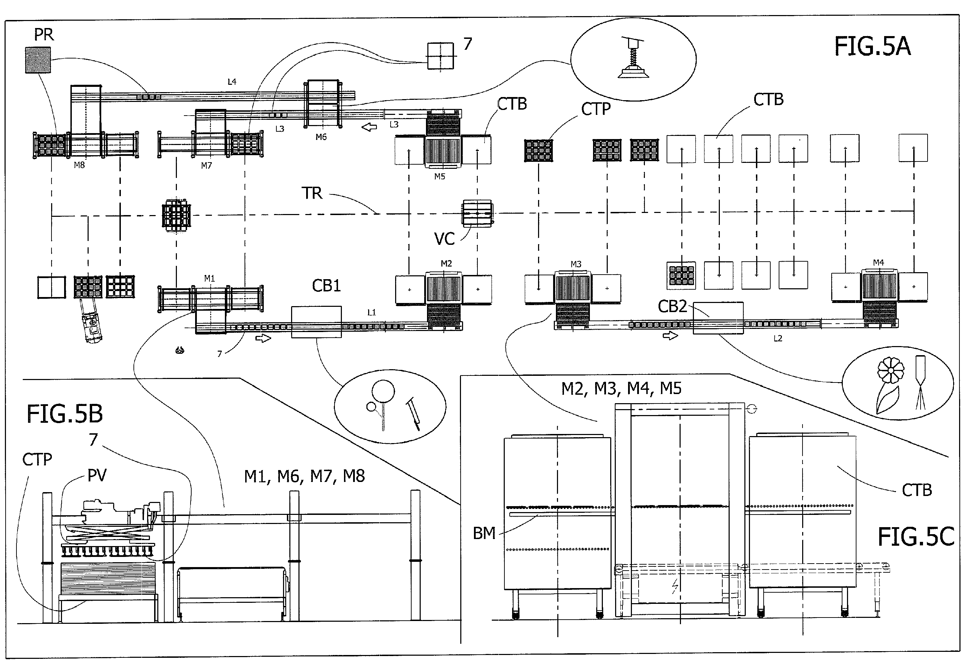

The system for manufacturing tiles made of resin as herein disclosed, basically comprises the following key components:
- one or more casting apparatuses for pouring the compounds, still in their liquid state, into special trays as shown in Fig.1A;
- a plurality of collection trays (7) for collecting liquid resin as per Fig.1B;
- a plant consisting of several machines, including the above casting apparatus as shown in Fig.5A.

The casting apparatus generally comprising:
- a tank (1) for containing liquid resin;
- a series of tubes (2) and the end applicator (13) having a longitudinal slit in the lower part thereof for the formation a laminar jet of resin (RE) as wide as the collection tray (7) - see also Fig. 1 D;
- a valve (14) and a pump (20) for adjusting the flow rate of the resin;
- a second tank (4) for containing the catalyst;
- a series of tubes (5) and the end applicator (15) exhibiting a series of holes for directing the catalyst jets (CT) on the laminar flow of the resin (RE);
- a valve (16) and a pump (21) for adjusting the flow rate of the catalyst;
- a trays conveying system (8); see Fig.1A showing a conventional belt conveying system.

A second version of the casting apparatus as described hereinabove could consist in a single tank filled by both resin components and a distributor alike to the one referred to with the numeral (13) illustrated in Fig.1A; all of them (i.e. tank, piping and distributor) are kept at a low temperature in order to stop or delay the reaction of solidification prior to performing the casting.

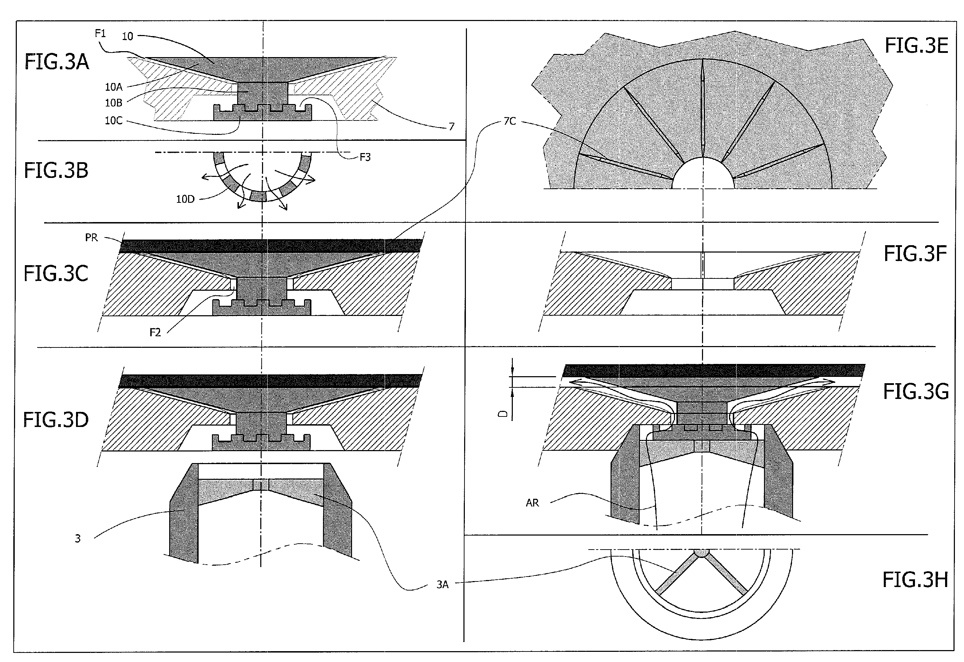

Each tray, (see figures 1B, 1C and Figures of the Series 3), comprises the following:
- a plane surface (7A) with raised edge (7B) up to a height (H), corresponding to the amount of resin to be contained; in the plane surface, there are one or more holes (18), shaped internally with forms suitable for housing air inlet valves (10); the upper conical part of the hole has several radial protrusions (7C) serving as spacers for the valve (10), - see Figure 3E;
- one or more valves (10), each consisting of an upper conical part (10A), a middle cylindrical part (10B) and a lower annular part (10C) with notches (10D)- see Figures 3A and 3B.

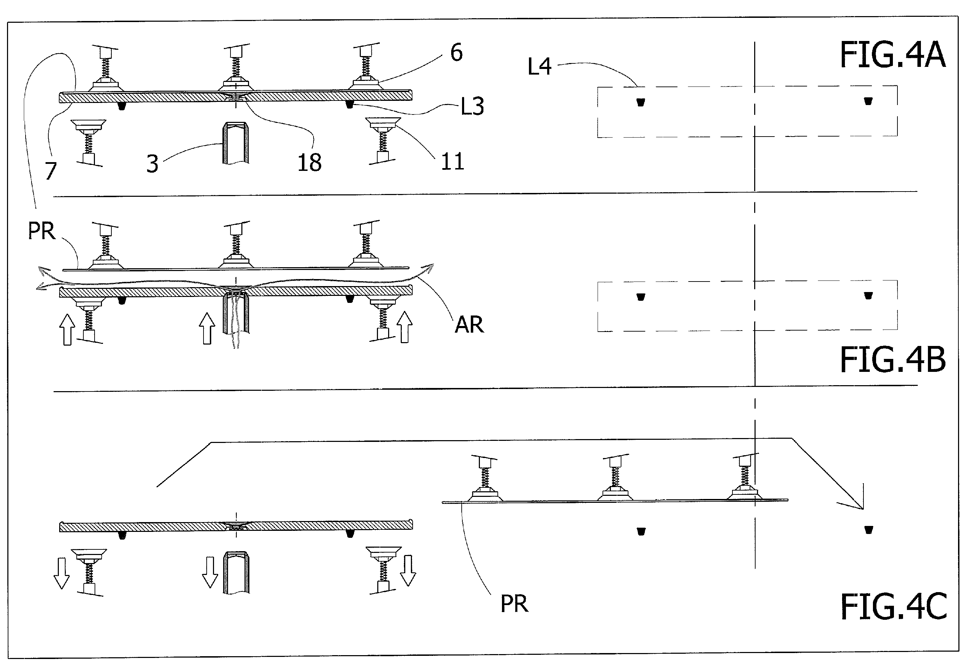

The plant for the automated production of resin tiles -see Figure 5A-primarily comprises the following:
- a first conveying line (L1) on which empty trays (7) are loaded and filled with resin by the apparatus of Fig.1A in the booth or portion (CB1);
- a second conveying line (L2) on which the trays, with resin already solidified, are loaded and treated with a transparent protective varnish in the booth or portion (CB2) and possibly decorated;
- a pair of parallel conveying lines (L3) and (L4) for picking up and separating resin tiles (PR) from the trays (7);
- storage based on two types of containers, one container of the roller type destined to the trays filled with resin (CTB) and a second one supplied with a platform (CTP) for the sole tiles or containers at the end of the production cycle;
- a system for moving containers among several end users, comprising automatic vehicles (VC) and route tracks (TR);
- a series of machines for loading/unloading trays and tiles (M1 to M8) onto and from (CTP) and (CTB) containers; such machines are shown in Figures 5B and 5C where the two types of containers are also visible;
- an apparatus inserted into the machine (M6), see Figure 4A, for separating the tiles from the trays; said apparatus consisting of a series of upper (6) and lower (11) suction cups, respectively for picking up the tiles from the trays and stopping the latter, and a tube (3) insertable into the hole (18) of the tray (7) for insufflation of compressed air.

The main difference between the roller containers (CTB) and the platform containers (CTP) is that the former have rollers plane surfaces separated in height so that the trays are not in contact with one another (being the resin or transparent varnish not yet dried), whereas the latter exhibit several layers of trays or tiles stacked one over the other and touching each other.

Since the machines, the containers and the handling of the automated production plant as shown in Fig.5A are based on technologies already known in the ceramic sector, they will not be described in detail in the present invention.

### DESCRIPTION OF THE PRODUCTION SYSTEM ACCORDING TO THE

### PRESENT INVENTION

The key point of the invention described herein concerns the use of the tray (7) acting as a container for the liquid resin so as to enable the several processing steps as in the case of a common ceramic tile.

The main processing steps are therefore as follows:
- filling the trays with resin mixed with the catalyst by means of the distributors (13) and (15), while said trays are passing via the conveying line (8), see Figure 2B;
- spatula-applied leveling (9) of previous resin layer, see Figure 2C; Following the above step, the trays are stored in roller containers for the time necessary to the solidification of resin; such operations are carried out in the conveying line (L1) by the machines (M2) and (M3) illustrated in figure 5A.

The roller containers wherein the trays with solidified resin are arranged, are unloaded onto the conveying line (L2) by the machine (M3) where following processings are performed:
- possibly one or more decoration in series by means of a suitable decorator, generally of the digital type, not shown in the appended figures;
- applying one final transparent protective layer using the device (25), generally an airbrush, see Figure 2D.

Following this step, the trays are once more stored by the machine (M4) in roller containers (CTB) for the time necessary to the solidification of the transparent layer.

At last, the final processing step of picking up the tiles from the trays occurs as follows:
- the trays are removed from the roller containers and conveyed to the line (L3) by the machine (M5);
- a certain number of trays is stopped and positioned below the suction cups plane of the machine (M6); the upper suction cups (6) of the machine simultaneously are lowered until they are in contact with the tiles (PR) which are still inside the trays (7) as illustrated in Figure 4A;
- subsequently the lower suction cups (11) as well as the tubes (3) are lifted, the former due to the fact that the trays have been stopped, the latter for insufflating air so as to obtain separation of the tiles from the trays.

Figures 3A and 3C are a section view of the tray with the resin tile (PR) and the valve (10) in its rest position; (F1) and (F2) indicate the interspaces between the valve and the tray where air can however enter even with the valve (10) in its low position.

In the upper part of the tube (3) there is arranged a crosspiece (3A), see also FIG. 3H, acting as a pusher towards the top of the valve (10); the tube is inserted until the top part thereof and the tray as shown in FIG. 3G abut against one another.

In this way the separation of the solidified piece from the tray occurs due to the simultaneous action of the air thrust over the entire lower surface of the tile and to the lifting of a portion (D) of the valve, see FIG.3G. The lifting (D), due to the fact that the tiles separate from the plane of the tray, is minimum (a few tenths of a mm), so that no displacement of the suction cups (6) is necessary, which suction cups are made up of plastic materials sufficiently deformable.

Following separation of the tiles, the suction cup units (6), fixed to a special structure of the machine, are raised and while doing so they pick up the tiles from the conveying line (L3) laying them onto the parallel conveying line (L4); simultaneously to the lifting action of the suction cups (6), the lowering of the lower suction cups (11) and the tube (3) occurs as per FIG 4C.

The material of the trays will preferably be of a type with low adhesion to the solidified resin for the obvious reason that at the end of the production process the tiles shall be separate from the trays.

Empty trays and finished tiles will be placed onto the pallets (CTP) by the machines (M7) and (M8).

The subsequent selection and packaging steps are not shown in the layout of Figure 5A as they lie outside the invention herein.

### REMARKS ON THE ADVANTAGES OF THE LAYING OF THE TILES HEREIN

It is worth noting some important aspects characterizing the tiles of the present invention, especially during the laying, which are basically the following:
- very low unit weight (about one kg/m2 for tiles with thickness less than one millimeter) which is an important aspect in the event of environments restructuring;
- tiles bonding by brush application of a special adhesive without the need of any special tools and techniques; the joints of the tiles are minimized as said adhesive may have a color similar to the one of the bottom thereof;
- Tiles adjustment by cutting the pieces with normal scissors, thereby avoiding use of customary laying tools; this makes the tiles laying easy and available to everyone.

The invention thus conceived is susceptible to numerous modifications or variations, all of them falling within the scope thereof; furthermore all parts are replaceable with other technically equivalent.

## Claims

1. A system for manufacturing tiles made of resin (generally a bi-component liquid mixture constituted by resin and the solidification catalyst thereof, similar to that used for seamless resin flooring), principally composed of:
- one or more pouring apparatuses for pouring the components of the resin still in the liquid state into specific trays;
- a plurality of collection trays for collecting the liquid resin mixture.

2. The system for manufacturing tiles made of resin according to claim 1, **characterized in that** a single casting apparatus is typically composed of:
- a tank (1) for the liquid resin, connected by means of the tubing (2) to the end applicator (13), said applicator having a longitudinal slit in the lower part thereof for the formation a laminar jet of resin (RE) as wide as the collection tray (7);
- a tank (4) for the liquid catalyst, connected by means of the tubing (5) to the end applicator (15) and having a series of holes for directing the jets (CT) preferably on the jet of resin (RE) or where the jet of resin impacts the bottom of the container.

3. The system for manufacturing tiles made of resin according to claim 1, **characterized in that** each tray consists of:
- a plane surface (7A) with a raised edge (7B) up to a height (H) corresponding to the amount of resin to be contained; in the plane surface, there are one or more holes (18) shaped internally with forms suitable for housing air inlet valves (10); the upper conical part of the hole has several radial protrusions (7C) serving as spacers for the valve (10);
- one or more valves (10), each consisting up of an upper conical part (10A), a middle cylindrical part (10B) and a lower annular part (10C) with notches (10D) for passage of air when the valve is lifted.

4. The system for manufacturing tiles made of resin, **characterized in that** in addition to comprising the apparatuses and devices of claim 1, the production system also comprises a plurality of machines, whereof the machine (M6) for separating the tiles from the trays is principally composed of:
- a series of suction cups (6) located above the plane surface of the trays, for lifting and separating the tiles made of resin, said suction cups (6) being fixed to a structure that translates between two parallel conveying lines (L3) and (L4);
- a series of suction cups (11) with a possibility of vertical movement, located under the plane surface of the trays and acting upon the latter in contrast to the suction cups (6) when the tiles are picked up;
- a series of tubes (3) with a possibility of vertical movement, for insufflation of air into the holes (18) of the trays (7).

5. The system for manufacturing tiles made of resin according to claim 2, **characterized in that** the casting apparatus described hereinabove could also consist of a single tank containing the two components of the resin and a distributor line similar to (13) in Figure 1 A; both (tank and distributor line) would be kept at a low temperature so as to delay or block the solidification reaction prior to application.

6. The tiles obtained from the present processing method are **characterized in that** they are thin in thickness (even less than a millimetre) flexible and trimmable with a normal pair of scissors; furthermore, the laying thereof can be carried out using specific adhesives spread with a brush and of a colour similar to the background of the various pieces.
